# EUROPEAN PATENT APPLICATION

(11) **EP 4 524 882 A1**
(43) Date of publication of application: **19.03.2025**
(21) Application number: 23197227.4
(22) Date of filing: 13.09.2023
(51) Int. Cl.: G06T 7/00, G06V 10/00

(54) **EXPLAINABILITY IN MACHINE-LEARNING-BASED ANATOMICAL ABNORMALITY DETECTION ALGORITHM**

(71) Applicant: Siemens Healthineers AG, 91301 Forchheim (DE)
(72) Inventor: Menon, Deepak K., 560100 Bangalore (IN); Mabiyan, Rashmitha R., 576124 Udupi (IN)
(74) Representative: Siemens Healthineers Patent Attorneys

(57) **Abstract**

Various examples of the disclosure relate to explain-ability of a machine learning algorithm for detecting at least one abnormality within an anatomical region of interest. A trained machine learning algorithm is used to process one or more images associated with at least one abnormality within an anatomical region of interest to determine one or more reasons for a further trained machine learning algorithm detecting the at least one abnormality in the one or more images.

## Description

Various examples of the disclosure relate to explain-ability of a machine learning algorithm for detecting at least one abnormality within an anatomical region of interest. Various examples of the disclosure specifically relate to determining, using a machine learning algorithm and based on one or more images associated with at least one abnormality within an anatomical region of interest, one or more reasons for a further machine learning algorithm detecting the at least one abnormality in the one or more images.

Increasing life expectancy, soaring rates of chronic diseases, and the continuous development of costly new therapies result in healthcare costs skyrocketing. Artificial intelligence (AI), e.g., machine learning and/or deep learning, promises to alleviate the impact of these developments by improving healthcare and making it more cost-effective.

In clinical practice, AI often comes in the form of clinical decision support systems (CDSS), assisting clinicians in diagnosis of disease and treatment decisions. Where conventional CDSS match the characteristics of individual patients to an existing knowledge base, AI-based CDSSs apply AI models trained on data from patients matching the use case at hand.

Even though AI-based systems outperform manual diagnosis in most cases, AI-based solutions in healthcare are criticized due to a lack of reasoning. For example, an AI-based lung nodule detection algorithm is not able to explain the reasons why one or more region of interest (ROI) of a lung are detected/determined/predicted as a lung nodule. Consequently, users of the AI-based systems have to speculate on the reasons. Thus, explain-ability is a key challenge when it comes to applications of AI-based systems such as CDSSs in healthcare.

Accordingly, there is a need for advanced techniques which mitigate or overcome the above-identified drawbacks or restrictions. There is a need for advanced techniques to bridge gaps between clinical experts and AI-based algorithms, e.g., techniques of precise, reliable, and automatic determination of one or more reasons for an AI-based algorithm or system establishing diagnoses of diseases and/or making treatment decisions.

This need is met by the features of the independent claims. The features of the dependent claims define embodiments.

A computer-implemented method is provided. The method comprises obtaining one or more images associated with at least one abnormality within an anatomical region of interest. The method further comprises determining, using a first trained machine learning algorithm and based on the one or more images, one or more reasons for a second trained machine learning algorithm detecting the at least one abnormality in the one or more images.

A computer program product or a computer program or a computer-readable storage medium including program code is provided. The program code can be executed by at least one processor. Executing the program code causes the at least one processor to perform a method. The method comprises obtaining one or more images associated with at least one abnormality within an anatomical region of interest. The method further comprises determining, using a first trained machine learning algorithm and based on the one or more images, one or more reasons for a second trained machine learning algorithm detecting the at least one abnormality in the one or more images.

A computing device comprising a processor and a memory is provided. Upon loading and executing program code from the memory, the processor is configured to perform a method. The method comprises obtaining one or more images associated with at least one abnormality within an anatomical region of interest. The method further comprises determining, using a first trained machine learning algorithm and based on the one or more images, one or more reasons for a second trained machine learning algorithm detecting the at least one abnormality in the one or more images.

A medical imaging device comprising a computing device is provided. The computing device comprises a processor and a memory. Upon loading and executing program code from the memory, the processor is configured to perform a method. The method comprises obtaining one or more images associated with at least one abnormality within an anatomical region of interest. The method further comprises determining, using a first trained machine learning algorithm and based on the one or more images, one or more reasons for a second trained machine learning algorithm detecting the at least one abnormality in the one or more images.

A computer-implemented method for training a first machine learning algorithm is provided. The method comprises obtaining one or more training images associated with at least one abnormality within an anatomical region of interest. The method further comprises determining, using the first machine learning algorithm and based on the one or more training images, one or more predicted reasons for a second trained machine learning algorithm detecting the at least one abnormality. The method also comprises updating parameter values of the first machine learning algorithm based on a comparison between each of the one or more predicted reasons and a corresponding reference reason for the second trained machine learning algorithm detecting the at least one abnormality.

A computer program product or a computer program or a computer-readable storage medium including program code is provided. The program code can be executed by at least one processor. Executing the program code causes the at least one processor to perform a method for training a first machine learning algorithm. The method comprises obtaining one or more training images associated with at least one abnormality within an anatomical region of interest. The method further comprises determining, using the first machine learning algorithm and based on the one or more training images, one or more predicted reasons for a second trained machine learning algorithm detecting the at least one abnormality. The method also comprises updating parameter values of the first machine learning algorithm based on a comparison between each of the one or more predicted reasons and a corresponding reference reason for the second trained machine learning algorithm detecting the at least one abnormality.

A computing device comprising a processor and a memory is provided. Upon loading and executing program code from the memory, the processor is configured to perform a method for training a first machine learning algorithm. The method comprises obtaining one or more training images associated with at least one abnormality within an anatomical region of interest. The method further comprises determining, using the first machine learning algorithm and based on the one or more training images, one or more predicted reasons for a second trained machine learning algorithm detecting the at least one abnormality. The method also comprises updating parameter values of the first machine learning algorithm based on a comparison between each of the one or more predicted reasons and a corresponding reference reason for the second trained machine learning algorithm detecting the at least one abnormality.

A medical imaging device comprising a computing device is provided. The computing device comprises a processor and a memory. Upon loading and executing program code from the memory, the processor is configured to perform a method for training a first machine learning algorithm. The method comprises obtaining one or more training images associated with at least one abnormality within an anatomical region of interest. The method further comprises determining, using the first machine learning algorithm and based on the one or more training images, one or more predicted reasons for a second trained machine learning algorithm detecting the at least one abnormality. The method also comprises updating parameter values of the first machine learning algorithm based on a comparison between each of the one or more predicted reasons and a corresponding reference reason for the second trained machine learning algorithm detecting the at least one abnormality.

It is to be understood that the features mentioned above and those yet to be explained below may be used not only in the respective combinations indicated, but also in other combinations or in isolation without departing from the scope of the invention.

Independent of the grammatical term usage, individuals with male, female or other gender identities are included within the term.
FIG. 1 schematically illustrates an exemplary image associated with a lung nodule.
FIG. 2 schematically illustrates an exemplary image associated with another lung nodule.
FIG. 3 schematically illustrates an exemplary image associated with a further lung nodule.
FIG. 4 schematically illustrates an exemplary image associated with a still further lung nodule.
FIG. 5 schematically illustrates an exemplary architecture of machine learning algorithms according to various examples.
FIG. 6 is a flowchart of a method according to various examples.
FIG. 7 is a flowchart of a further method according to various examples.
FIG. 8 is a block diagram of a computing device according to various examples.

Some examples of the present disclosure generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired. It is recognized that any circuit or other electrical device disclosed herein may include any number of microcontrollers, a graphics processor unit (GPU), integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, any one or more of the electrical devices may be configured to execute a program code that is embodied in a non-transitory computer readable medium programmed to perform any number of the functions as disclosed.

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Various techniques disclosed herein generally relate to explain-ability of a machine learning algorithm for detecting at least one abnormality within an anatomical region of interest.

In its essence, explain-ability can be understood as a characteristic of an AI-driven algorithm or system allowing a person to reconstruct why a certain AI provided the presented predictions. Explain-ability has many facets and, other terms such as interpretability and/or transparency are often used synonymously.

According to this disclosure, a (first) trained machine learning algorithm is used to process one or more images associated with at least one abnormality within an anatomical region of interest to determine one or more reasons for a second/further trained machine learning algorithm detecting the at least one abnormality in the one or more images.

The second/further trained machine learning algorithm may be used to detect the at least one abnormality presented in the one or more images, while the first trained machine learning algorithm may be used to demonstrate explain-ability of the second/further trained machine learning algorithm, i.e., to determine one or more reasons why the second/further trained machine learning algorithm detects/determines/predicts the at least one abnormality presented in the one or more images.

For example, it would be possible to determine one or more reasons for a lung nodule detection algorithm detecting one or more lung nodules in one or more computer tomography (CT) images by feeding the one or more CT images to the (first) trained machine learning algorithm. Such a lung nodule detection algorithm may be any one available or published before filing this application. For example, the lung nodule detection algorithm may be any one disclosed and referred to in the following non-patent literature:
- Li, Rui, et al. "Deep learning applications in computed tomography images for pulmonary nodule detection and diagnosis: A review." Diagnostics 12.2 (2022): 298.
- Pehrson, L. M., Nielsen, M. B., & Ammitzbol Lauridsen, C. (2019). Automatic pulmonary nodule detection applying deep learning or machine learning algorithms to the LIDC-IDRI database: a systematic review. Diagnostics, 9(1), 29.

In another example, it would be also possible to determine one or more reasons for a brain tumor detection algorithm detecting one or more tumors in one or more magnetic resonance imaging (MRI) images by processing the one or more MRI images using the (first) trained machine learning algorithm. Such a brain tumor detection algorithm may be any one available or published before filing this application. For example, the brain tumor detection algorithm may be any one disclosed and referred to in a non-patent literature - Nazir, M., Shakil, S., & Khurshid, K. (2021). Role of deep learning in brain tumor detection and classification (2015 to 2020): A review. Computerized medical imaging and graphics, 91, 101940.

In general, the techniques disclosed herein can be used to demonstrate explain-ability of various machine learning algorithms for detecting at least one abnormality within an anatomical region of interest, e.g., a heart, a liver, a kidney, a stomach, a segment of veins or arteries, a segment of intestines, and so on.

Depending on anatomical and/or physiological characteristics of the anatomical region of interest, various medical images may be acquired using medical imaging techniques such as CT, MRI, radiography comprising projection radiography and fluoroscopy, positron emission tomography (PET), single-photon emission computed tomography (SPECT), PET-CT, ultrasound, and etc. The one or more images associated with the at least one abnormality may comprise medical images.

According to various examples, the one or more reasons may comprise at least one of a respective size of each of the at least one abnormality, a respective location of each of the at least one abnormality, a respective margin morphology of each of the at least one abnormality, a count of the at least one abnormality, a respective growth rate of each of the at least one abnormality, a respective type of each of the at least one abnormality, and a respective shape of each of the at least one abnormality.

According to various examples, the second/further trained machine learning algorithm may be any existing abnormality detection algorithm and this disclosure may mainly focus on explaining the new or novel first (trained) machine learning algorithm for demonstrating explain-ability of the second/further trained machine learning algorithm.

For the sake of simplicity, the techniques disclosed herein will be explained in connection with explain-ability of a lung nodule detection algorithm.

According to various examples, the at least one abnormality may comprise one or more lung nodules and the one or more reasons may comprise at least one characteristic associated with the one or more lung nodules.

According to the glossary of terms for chest imaging proposed by the Fleischner Society, a lung nodule is defined as an approximately rounded opacity more or less well-defined measuring up to 3 cm in diameter.

Depending on their attenuation in CT imaging, lung nodules may be categorized in three different types:
- solid nodules, the most common type, characterized by homogeneous soft-tissue attenuation,
- ground-glass nodules, nonuniform in appearance with a hazy increase in local attenuation of lung parenchyma not obscuring the underlying bronchial and vascular structures, and
- part-solid nodules, comprising both solid and ground-glass attenuation components.

Characteristics associated with lung nodules may comprise imaging characteristics. Imaging characteristics may comprise nodule type, nodule diameter, nodule location, nodule shape, presence and type of calcifications, and presence of spiculation or cavitation.

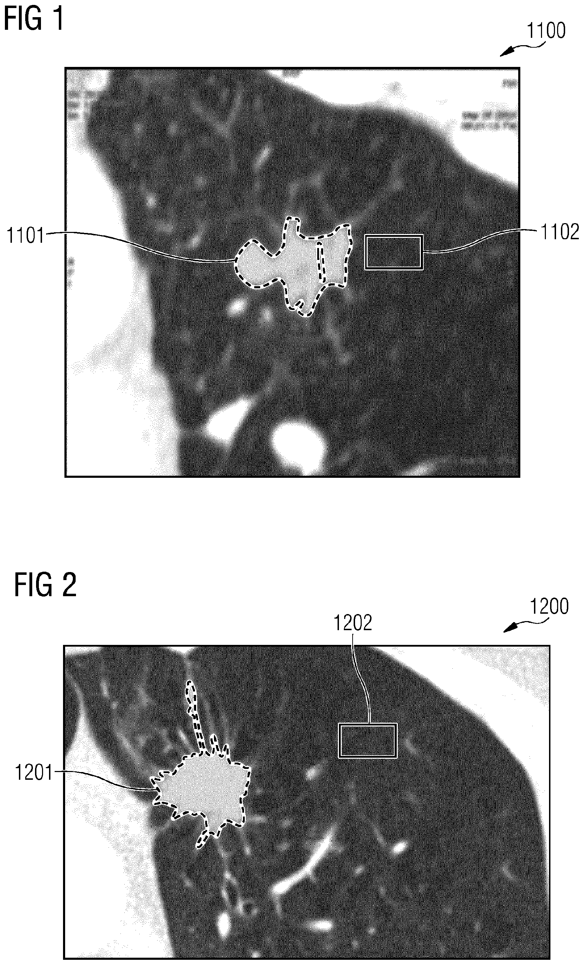

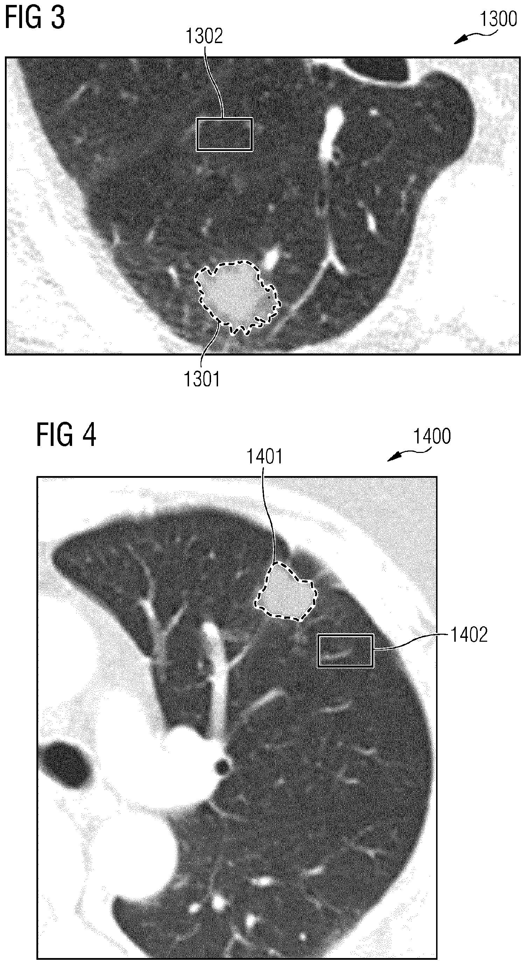

FIG. 1 to FIG. 4 respectively illustrate four CT images 1100, 1200, 1300, and 1400 associated with four different lung nodules 1101, 1201, 1301, and 1401.

The lung nodule 1101 has a polygonal shape with multiple facets, peripheral subpleural location, and a relatively flat lesion. The lung nodule 1201 has a corona radiata sign and lobulated or scalloped smooth margins. The lung nodule 1301 is a part-solid nodule, i.e., comprising both solid and ground-glass attenuation components. The lung nodule 1401 is lobulated in contour and has some spicules radiating to the pleura. These characteristics associated with the four lung nodules 1101, 1201, 1301, and 1401 may be experts' rationale for diagnosing the corresponding nodules 1101, 1201, 1301, and 1401 presented in the corresponding images 1100, 1200, 1300, and 1400.

Many of the lung nodule detection algorithms available or presented before filing this application have been shown to outperform experts in detecting lung nodules, e.g., detecting the lung nodules 1101, 1201, 1301, and 1401 in CT images 1100, 1200, 1300, and 1400, respectively. Such lung nodule detection algorithms may detect a nodule based on certain characteristics that could be missed during manual review in CT scans. However, these lung nodule detection algorithms are not able to explain the basis or reasons for the detection of the lung nodules, e.g., in clinical terms.

By using the techniques disclosed herein, one or more reasons why a lung nodule detection algorithm detects, determines, or predicts at least one lung nodule presented in one or more images can be automatically determined by using a trained machine learning algorithm. The determined one or more reasons may be added to or displayed in the one or more images as decision factors to assist experts to establish a diagnosis and make a treatment decision.

According to this disclosure, after or when detecting, using an existing lung nodule detection algorithm, the corresponding nodules 1101, 1201, 1301, and 1401 in the corresponding images 1100, 1200, 1300, and 1400, the proposed techniques can be utilized to determine one or more reasons why the lung nodule detection algorithm detects, determines, or predicts the corresponding nodules 1101, 1201, 1301, and 1401 in the corresponding images 1100, 1200, 1300, and 1400.

For example, the proposed techniques can determine that the lung nodule 1101 in image 1100 has a polygonal shape with multiple facets, peripheral subpleural location, and a relatively flat lesion; the lung nodule 1201 in image 1200 has a corona radiata sign and lobulated or scalloped smooth margins; the lung nodule 1301 in image 1300 is a part-solid nodule, i.e., comprising both solid and ground-glass attenuation components; and the lung nodule 1401 in image 1400 is lobulated in contour and has some spicules radiating to the pleura. Additionally or optionally, these reasons may be displayed in corresponding images 1100, 1200, 1300, and 1400, i.e., reasons or decision factors 1102, 1202, 1302, and 1402 respectively shown in FIG. 1 to FIG. 4.

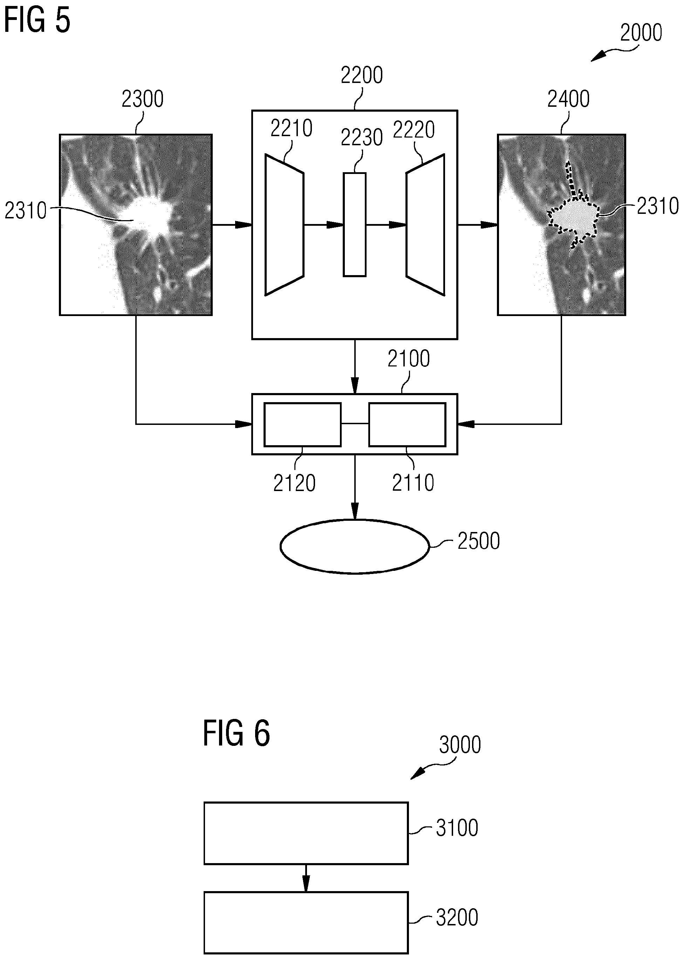

FIG. 5 schematically illustrates an exemplary architecture 2000 of machine learning algorithms according to various examples. The architecture 2000 may comprise a first machine learning algorithm 2100 and a second/further machine learning algorithm 2200.

The second/further machine learning algorithm 2200 may be used to detect at least one abnormality 2310 presented in one or more images 2300. For example, the second/further machine learning algorithm 2200 may process the one or more images 2300 and output a segmented image 2400 depicting the at least one abnormality 2310. The segmented image 2400 may be obtained by segmenting each one of the one or more images 2300 such that a respective contour of the at least one abnormality 2310 is determined. The segmented image 2400 may highlight the at least one abnormality 2310 by outlining a respective contour of the at least one abnormality 2310 or by shading the at least one abnormality 2310 in different colors.

The first machine learning algorithm 2100 may be used to demonstrate explain-ability of the second/further machine learning algorithm 2200, i.e., to determine one or more reasons 2500 why the second/further machine learning algorithm 2200 detects, determines, or predicts the at least one abnormality 2310 presented in the one or more images 2300. For example, the first machine learning algorithm 2100 may determine the one or more reasons 2500 by processing the one or more images 2300.

According to various examples, the second machine learning algorithm 2200 may comprise a first module 2210 and a second module 2220. The first module 2210 may generate one or more feature maps 2230 based on the one or more images 2300 and the second module 2220 may generate or determine the segmented image 2400 based on the one or more feature maps 2230.

According to various examples, the first machine learning algorithm 2100 may alternatively determine the one or more reasons 2500 by processing the one or more feature maps 2230, i.e., without the one or more images 2300. Thus, it is possible to combine the first module 2210 and the first machine learning algorithm 2100 together to determine the one or more reasons 2500.

It is also possible to determine the one or more reasons 2500 by processing the one or more feature maps 2230 together with the one or more images 2300.

According to various examples, the one or more reasons 2500 may be determined alternatively or additionally based on the segmented image 2400. I.e., the one or more reasons 2500 may be determined based on at least one of the one or more images 2300, the one or more feature maps 2230, and the segmented image 2400.

According to various examples, the one or more images 2300, the feature maps 2230, and/or the segmented image 2400 may be stored in a database, e.g., a picture archiving and communication system (PACS) located within a local network of a hospital. Each of the one or more images 2300 may be correlated to a respective feature map and to a respective segmented image, e.g., using an identical index or a mapping. The first machine learning algorithm 2100 may obtain the one or more images 2300, the feature maps 2230, and/or the segmented image 2400 from the database.

Alternatively, the first machine learning algorithm 2100 may obtain the one or more images 2300 from a medical imaging scanner directly, e.g., a CT scanner.

According to various examples, the first machine learning algorithm 2100 and the second machine learning algorithm 2200 may be combined as a system, e.g., a CDSS, to output segmented images like the images 1100, 1200, 1300, and 1400 together with the reasons or decision factors 1102, 1202, 1302, and 1402 as respectively shown in FIG. 1 to FIG. 4.

In general, the first machine learning algorithm 2100 can be executed independently and separately from the second machine learning algorithm 2200. It is also possible that the first machine learning algorithm 2100 and the second machine learning algorithm 2200 are executed together. I.e., the one or more reasons 2500 may be determined during an exam for acquiring the one or more images 2300, e.g., using a CT scanner, in real-time.

FIG. 6 is a flowchart of a method 3000 according to various examples. The method 3000 pertains to determining, using a machine learning algorithm, e.g., the first machine learning algorithm 2100 of FIG. 5, and based on one or more images, e.g., the images 2300 of FIG. 5, associated with at least one abnormality, e.g., the abnormality 2310 of FIG. 5, within an anatomical region of interest, one or more reasons, e.g., 2500 of FIG. 5, for a further machine learning algorithm, e.g., the second machine learning algorithm 2200 of FIG. 5, detecting the at least one abnormality in the one or more images. For example, the one or more reasons 2500 may be determined by feeding the one or more images 2300 into the first machine learning algorithm 2100.

The method 3000 may be executed by a computing device comprising at least one processor upon loading program code. The computing device may be embedded in or connected with a medical imaging device, e.g., a CT scanner, an MRI scanner, a PET scanner and etc. Details of the method 3000 are described in connection with FIG. 5 below.

Block 3100: obtaining one or more images associated with at least one abnormality within an anatomical region of interest.

According to various examples, the one or more images may comprise one or more medical images depicting the anatomical region of interest.

For example, the one or more images may comprise CT images depicting a region of a lung. The at least one abnormality may comprise one or more lung nodules and the one or more reasons may comprise at least one imaging characteristic associated with the one or more lung nodules.

The one or more images could be loaded from a PACS or obtained directly from a medical imaging scanner, such as a CT scanner. Block 3100 could include controlling a medical imaging scanner to acquire the one or more images. The one or more images could be loaded from a memory. Alternatively, the one or more images may be received directly from a medical imaging scanner during a scan to perform a real-time determination of the one or more reasons.

Block 3200: determining, using a first trained machine learning algorithm and based on the one or more images, one or more reasons for a second trained machine learning algorithm detecting the at least one abnormality in the one or more images.

For example, the one or more reasons may be determined using the first machine learning algorithm 2100 of FIG. 5 to demonstrate explain-ability of the second/further machine learning algorithm 2200 of FIG. 5.

According to various examples, the one or more images may further comprise one or more feature maps, e.g., the feature maps 2230 of FIG. 5, representing the at least one abnormality, and the second trained machine learning algorithm, e.g., the second machine learning algorithm 2200 of FIG. 5, may comprise a first module, e.g., the first module 2210 of FIG. 5. The method 3000 may further comprise generating, using the first module 2210 of the second trained machine learning algorithm 2200, the one or more feature maps 2230 based on the one or more medical images 2300.

According to various examples, the one or more images may further comprise a segmented image 2400 depicting the at least one abnormality 2310, and the second trained machine learning algorithm 2200 may further comprise a second module 2220 connectable to the first module 2210. The method 3000 may further comprise determining, using the second module 2220 of the second trained machine learning algorithm 2200, the segmented image 2400 based on the one or more feature maps 2230.

According to this disclosure, the second machine learning algorithm may comprise a lung nodule detection algorithm detecting one or more lung nodules in one or more computer tomography (CT) images, e.g., the *syngo.*CT Lung CAD (Computer Aided Detection) developed by Siemens Healthineers.

Once a lung nodule is detected by the lung nodule detection algorithm, the same nodule along with its feature maps extracted from the lung nodule detection algorithm may be passed to the first machine learning algorithm. The first machine learning algorithm would provide a list of decision factors and/or imaging characteristics that are associated with a nodule which explains the reasons for the decision by the detection algorithm.

According to various examples, the one or more reasons or decision factors may be the reason with the highest probability. Alternatively, the one or more reasons or decision factors may comprise the top 3, 5, or 10 reasons with a probability score of at least 50% to explain the nodule detection.

According to various examples, the second machine learning algorithm may have an encoder-decoder structure, such as U-net as disclosed in a non-patent literature - Ronneberger, Olaf, Philipp Fischer, and Thomas Brox. "U-net: Convolutional networks for biomedical image segmentation." International Conference on Medical image computing and computer-assisted intervention. Springer, Cham, 2015. It is also possible that the second machine learning algorithm may be a 3D U-net.

For example, the second machine learning algorithm 2200 of FIG. 5 may have an encoder-decoder structure. The first module 2210 may be an encoder configured to generate the feature maps 2230, and the second module 2220 may be a decoder configured to generate or determine the segmented image 2400 based on the feature maps 2230. The feature maps 2230 may be generated by different layers of the encoder.

The first machine learning algorithm 2100 may have a multi-class classifier 2110 such as XGBoost as disclosed in a non-patent literature - Chen, Tianqi & Guestrin, Carlos. (2016). "XGBoost: A Scalable Tree Boosting System." 785-794. 10.1145/2939672.2939785, which could classify and assign probability scores or values for each of the decision factors such as decision factors 1102, 1202, 1302, and 1402 as shown in FIG.s 1-4, respectively. In addition, it may have a module 2120 to generate the decision factors based on the probability scores or values obtained from the classifier 2110.

For example, the classifier 2110 of the first machine learning algorithm may provide a probability score or value for each of the labels/set of decision factors. The module 2120 may generate one or more reasons or decision factors with higher probability scores. Alternatively, the one or more reasons or decision factors may comprise the top 3, 5, or 10 reasons with a probability score of at least 50% to explain the nodule detection.

According to various examples, before applying the trained first machine learning algorithm 2100 to determine the one or more reasons 2500 for the second trained machine learning algorithm 2200 detecting the at least one abnormality 2310 in the one or more images 2300, the first machine learning algorithm 2100 may be trained by updating its trainable parameters and hyperparameters.

According to the disclosure, various training methods of neural networks may be applied to train the first machine learning algorithm 2100, such as supervised learning, unsupervised learning, semi-supervised learning, reinforce learning and etc.

In general, the first machine learning algorithm 2100 may be executed by a node of an edge computing system, or by a cloud computing system, or by a medical imaging device such as a CT scanner, for example by a computing device embedded into or connected to the CT scanner.

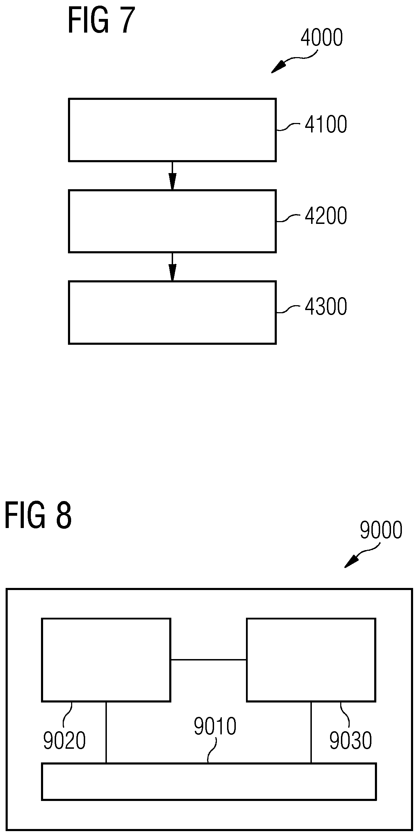

FIG. 7 is a flowchart of a method 4000 according to various examples. The method 4000 pertains to performing a training of the first machine learning algorithm 2100 of FIG. 5. The method 4000 utilizes supervised learning. Details of the method 4000 are described below.

Block 4100: obtaining one or more training images associated with at least one abnormality within an anatomical region of interest.

According to various examples, the one or more training images may comprise one or more medical images depicting the anatomical region of interest.

For example, the one or more training images may comprise CT images depicting a region of a lung. The at least one abnormality may comprise one or more lung nodules and the one or more predicted reasons and the corresponding reference reason may respectively comprise at least one imaging characteristic associated with the one or more lung nodules.

For example, the one or more training images may be obtained from a database, such as the PACS.

According to various examples, the one or more training images may be obtained or selected from training images used for training the second machine learning algorithm. I.e., the first 2100 and the second 2200 machine learning algorithms may be trained using the same training dataset.

Block 4200: determining, using a first machine learning algorithm and based on the one or more training images, one or more predicted reasons for a second trained machine learning algorithm detecting the at least one abnormality.

The same techniques described at block 3200 of FIG. 6 could be applied to at block 4200.

Block 4300: updating parameter values of the first machine learning algorithm based on a comparison between each of the one or more predicted reasons and a corresponding reference reason for the second trained machine learning algorithm detecting the at least one abnormality.

According to various examples, for each of the one or more training images obtained at block 4100, a corresponding reference reason(s) may be obtained by experts during an annotation process. For example, the reference reason for each of the training images may be created together with the ground truth image for training the second machine learning algorithm 2200, e.g., by clinical experts.

For example, clinical experts may annotate lung nodules in patient medical images, e.g., CT images, which are used to train lung nodule detection algorithms. During this annotation process, experts' rationale or reasons for marking a nodule as a finding may also be collected. For explaining the lung nodule detection model or algorithm, the training data used for training the lung nodule detection algorithms may be also the data used for training the first machine learning algorithm, and the experts' rationale or reasons may be the reference reasons for training the first machine learning algorithm.

Referring back to FIG. 1 to FIG. 4, the reference reason may comprise the following:
- The lung nodule 1101 has a polygonal shape with multiple facets, peripheral subpleural location, and a relatively flat lesion.
- The lung nodule 1201 has a corona radiata sign and lobulated or scalloped smooth margins.
- The lung nodule 1301 is a part-solid nodule, i.e., comprising both solid and ground-glass attenuation components.
- The lung nodule 1401 is lobulated in contour and has some spicules radiating to the pleura.

Since obtaining annotated data is quite a challenging process, according to various examples, the reference reason for each of the one or more training images may be obtained or created in a semi-supervised way.

According to various examples, the method 4000 may further comprise obtaining a set of training images associated with the at least one abnormality; clustering the set of training images into at least one group of training images based on one or more characteristics associated with the at least one abnormality; and determining, for each of the at least one group, at least one common reference reason for the second trained machine learning algorithm detecting the at least one abnormality, based on the respective group of training images. The set of training images may comprise the one or more training images and the corresponding reference reason may comprise the at least one common reference reason.

For example, a clustering algorithm, e.g., an AI-based method, may group nodules with similar characteristics in an unsupervised manner, followed by the manual review by experts and labeling of such groups formed. This may form the ground truths, i.e., reference reasons, in a semi-supervised approach. This may be done in two main steps including nodule clustering and cluster labeling.

### Nodule Clustering

Clustering is an unsupervised machine learning technique that can be used to group nodules with the same or similar characteristics together. For example, one of the components in the *syngo.CT* Lung CAD is called candidate generation, which generates the initial list of probable nodules using a deep 3D convolutional neural network (CNN). The deep CNN learns hierarchical (multi-scale) image features from training data. The learned feature hierarchy includes low-level image features, like edges, and high-level semantic features, e.g. the abstract shape of nodules. These features are used as input to the nodule clustering algorithm. By using the feature maps obtained from the *syngo.*CT Lung CAD, the nodule clustering pertains to the reasons for nodule detection.

In general, any existing lung nodules classification and/or clustering algorithms may be used to cluster lung nodules in each of the training images, e.g., any one disclosed or referred to in the following non-patent literature:
- Lee, Shu Ling Alycia, Abbas Z. Kouzani, and Eric J. Hu. "Random forest based lung nodule classification aided by clustering." Computerized medical imaging and graphics 34.7 (2010): 535-542.
- Shen, Wei, et al. "Multi-scale convolutional neural networks for lung nodule classification." Information Processing in Medical Imaging: 24th International Conference, IPMI 2015, Sabhal Mor Ostaig, Isle of Skye, UK, June 28-July 3, 2015, Proceedings 24. Springer International Publishing, 2015.
- Kumar, Devinder, Alexander Wong, and David A. Clausi. "Lung nodule classification using deep features in CT images." 2015 12th conference on computer and robot vision. IEEE, 2015.

According to various examples, the lung nodule clustering algorithm may take 2-D images or 3-D images, i.e., volume or sub-volume, as input. Alternatively or additionally, the lung nodule clustering algorithm may take feature maps generated by the lung nodule detection algorithm as input, e.g., the feature maps 2230 of FIG. 5.

### Cluster Labeling

Once the clusters are ready, every cluster can be examined and labeled by experts, i.e., creating common reference reasons for every cluster for the second trained machine learning algorithm detecting nodules in a respective cluster. The common reference reasons can be based on the characteristics of most of the nodules belonging to the given cluster. Such characteristics may comprise imaging characteristics such as the size of the nodule, the shape of the nodule, e.g., spherical, spiculated, corn-like structures, vessel attached, and the location of the nodule.

According to various examples, the one or more training images may further comprise one or more feature maps, e.g., the feature maps 2230 of FIG. 5, representing the at least one abnormality, and the second trained machine learning algorithm, e.g., the second machine learning algorithm 2200 of FIG. 5, may comprise a first module 2210. The method 4000 may further comprise generating, using the first module 2210 of the second trained machine learning algorithm 2200, the one or more feature maps 2230 based on the one or more medical images 2300.

According to various examples, the one or more training images may further comprise a segmented image 2400 depicting the at least one abnormality 2310, and the second trained machine learning algorithm 2200 may further comprise a second module 2220 connectable to the first module 2210. The method 4000 may further comprise determining, using the second module 2220 of the second trained machine learning algorithm 2200, the segmented image 2400 based on the one or more feature maps 2230.

A lung nodule can be characterized by multiple features. For example, a nodule could be spherical in shape and at the same time it may be attached to a vessel and both these features contribute to identifying it as a nodule. For example, one of the components in the *syngo.*CT Lung CAD is called candidate generation, which generates the initial list of probable nodules using a deep 3D convolutional neural network (CNN). The deep CNN learns hierarchical (multi-scale) image features from training data. The learned feature hierarchy includes low-level image features, like edges, and high-level semantic features, e.g. the abstract shape of nodules. These features are used as feature maps for training the first machine learning algorithm.

FIG. 8 is a block diagram of a computing device 9000 according to various examples. The computing device 9000 may comprise a processor 9020, a memory 9030, and an input/output interface 9010. The processor 9020 is configured to load program code from the memory 9030 and execute the program code. Upon executing the program code, the processor 9020 performs the method 3000 for determining, using a first machine learning algorithm, one or more reasons for a second machine learning algorithm detecting at least one abnormality in one or more images and/or the method 4000 for performing a training of the first machine learning algorithm.

According to this disclosure, a medical imaging device, e.g., a CT scanner, an MRI scanner, a PET scanner, and etc., may further comprise the computing device 9000 configured to perform the method 3000 and/or the method 4000. The computing device 9000 may be embedded in or connected with the medical imaging device, and thereby the medical imaging device may be also configured to perform the method 3000 and/or the method 4000.

Summarizing, techniques have been described that facilitate explain-ability of AI-based CDSS. Gaps between clinical experts and AI-based algorithms can be bridged. One or more reasons for an AI-based algorithm or system establishing diagnoses of diseases and/or making treatment decisions can be precisely, reliably, and automatically determined. For example, by determining one or more reasons why a lung nodule detection algorithm detects, determines, or predicts at least one lung nodule, e.g., a very tiny lung nodule, presented in one or more images, clinical experts can re-analyze the diagnosis and a nodule which may be missed during manual review in CT scans can also be detected or diagnosed. Further, the techniques disclosed herein can make machine learning algorithms transparent about the results and serve as evidence to the regulatory bodies, e.g., FDA (Food & Drug Administration), during clearances.

When machine learning algorithms, e.g., deep learning models, are retrained with new set of data, algorithm results may change due to data drift. Data drift occurs when the distribution of input data changes over time. In healthcare, data drift may occur due to changes in the demographics of the patient population over time or the change in diagnosis practices. Whenever a model is retrained, it is often difficult to explain, why the algorithm results changed. The techniques described herein can help in explaining exactly why the results have changed. For example, if the data used for retraining the model consists of new types of nodule, explain-ability makes it evident to the user.

In addition, techniques that have been described herein can be used to detect AI bias while training. When the lung nodule detection model is trained/re-trained, the described techniques can be used to understand the probable bias that the training data might have.

Although the disclosure has been shown and described with respect to certain preferred embodiments, equivalents and modifications will occur to others skilled in the art upon the reading and understanding of the specification. The present disclosure includes all such equivalents and modifications and is limited only by the scope of the appended claims.

For illustration, the disclosure is explained in detail based on 2-D images. The techniques disclosed herein can be also applied to 3-D images. For example, one or more images comprising multiple voxels may be processed by the techniques disclosed herein to determine one or more reasons for a second/further trained machine learning algorithm detecting at least one abnormality in one or more images, e.g., one or more lung nodules.

## Claims

1. A computer-implemented method (3000), comprising:
- obtaining (3100) one or more images associated with at least one abnormality (2310) within an anatomical region of interest; and,
- determining (3200), using a first trained machine learning algorithm (2100) and based on the one or more images (2300), one or more reasons for a second trained machine learning algorithm (2200) detecting the at least one abnormality (2310) in the one or more images (2300).

2. The computer-implemented method (3000) of claim 1, wherein the at least one abnormality (2310) comprises one or more lung nodules and the one or more reasons comprise at least one imaging characteristic associated with the one or more lung nodules.

3. The computer-implemented method (3000) of claim 1 or 2,
wherein the one or more images comprise one or more medical images depicting the anatomical region of interest.

4. The computer-implemented method (3000) of claim 3,
wherein the one or more images further comprise one or more feature maps (2230) representing the at least one abnormality (2310), and the second trained machine learning algorithm (2200) comprises a first module (2210),
the method further comprising:
- generating, using the first module (2210) of the second trained machine learning algorithm (2200), the one or more feature maps (2230) based on the one or more medical images.

5. The computer-implemented method (3000) of claim 4,
wherein the one or more images (2300) further comprise a segmented image (2400) depicting the at least one abnormality (2310), and the second trained machine learning algorithm (2200) further comprises a second module (2220) connectable to the first module (2210),
the method further comprising:
- determining, using the second module (2220) of the second trained machine learning algorithm (2200), the segmented image (2400) based on the one or more feature maps (2230).

6. The computer-implemented method (3000) of any one of the preceding claims, wherein the one or more reasons comprises at least one of the following:
- a respective size of each of the at least one abnormality (2310),
- a respective location of each of the at least one abnormality (2310),
- a respective margin morphology of each of the at least one abnormality (2310),
- a count of the at least one abnormality (2310),
- a respective growth rate of each of the at least one abnormality (2310),
- a respective type of each of the at least one abnormality (2310),
- a respective shape of each of the at least one abnormality (2310).

7. A computer-implemented method (4000), comprising:
- obtaining (4100) one or more training images associated with at least one abnormality (2310) within an anatomical region of interest;
- determining (4200), using a first machine learning algorithm and based on the one or more training images, one or more predicted reasons for a second trained machine learning algorithm detecting the at least one abnormality (2310);
- updating (4300) parameter values of the first machine learning algorithm based on a comparison between each of the one or more predicted reasons and a corresponding reference reason for the second trained machine learning algorithm detecting the at least one abnormality (2310).

8. The computer-implemented method (4000) of claim 7, wherein the at least one abnormality (2310) comprises one or more lung nodules and the one or more predicted reasons and the corresponding reference reason respectively comprise at least one imaging characteristic associated with the one or more lung nodules.

9. The computer-implemented method (4000) of claim 7 or 8,
wherein the one or more training images comprise one or more medical images depicting the anatomical region of interest.

10. The computer-implemented method (4000) of claim 9,
wherein the one or more training images further comprise one or more feature maps representing the at least one abnormality (2310), and the second trained machine learning algorithm comprises a first module,
the method further comprising:
- generating, using the first module of the second trained machine learning algorithm, the one or more feature maps based on the one or more medical images.

11. The computer-implemented method (4000) of claim 10,
wherein the one or more training images further comprise a segmented image depicting the at least one abnormality (2310), and the second trained machine learning algorithm further comprises a second module connectable to the first module,
the method further comprising:
- determining, using the second module of the second trained machine learning algorithm, the segmented image based on the one or more feature maps.

12. The computer-implemented method (4000) of any one of claims 7 to 11, further comprising:
- obtaining a set of training images associated with the at least one abnormality (2310), wherein the set of training images comprises the one or more training images;
- clustering the set of training images into at least one group of training images based on one or more characteristics associated with the at least one abnormality (2310); and,
- determining, for each of the at least one group, at least one common reference reason for the second trained machine learning algorithm detecting the at least one abnormality (2310), based on the respective group of training images, wherein the corresponding reference reason comprises the at least one common reference reason.

13. The computer-implemented method (4000) of any one of claims 7 to 12, wherein the one or more predicted reasons and the corresponding reference reason respectively comprise at least one of the following:
- a respective size of each of the at least one abnormality (2310),
- a respective location of each of the at least one abnormality (2310),
- a respective margin morphology of each of the at least one abnormality,
- a count of the at least one abnormality (2310),
- a respective growth rate of each of the at least one abnormality (2310),
- a respective type of each of the at least one abnormality (2310),
- a respective shape of each of the at least one abnormality (2310).

14. A computing device (9000) comprising a processor (9020) and a memory (9030), wherein upon loading and executing program code from the memory (9030), the processor (9020) is configured to perform the method (3000, 4000) according to any one of the preceding claims.

15. A medical imaging device comprising the computing device (9000) of claim 14.
